# EUROPÄISCHE PATENTSCHRIFT

(11) **EP 3 249 803 B1**
(45) Veröffentlichungstag und Bekanntmachung des Hinweises auf die Patenterteilung: **17.02.2021**
(21) Anmeldenummer: 17172226.7
(22) Anmeldetag: 22.05.2017
(51) Int. Cl.: H02P 25/06, H02P 5/74, H02P 6/00

(54) **STEUERUNG VON LANGSTATORLINEARMOTOR-SPULEN EINES LANGSTATORLINEARMOTOR-STATORS**
CONTROL OF LONG STATOR LINEAR MOTOR COILS OF A LONG STATOR LINEAR MOTOR STATOR
COMMANDE DE BOBINES DE MOTEUR LINÉAIRE À STATOR DÉPLOYÉ D'UN STATOR DE MOTEUR LINÉAIRE À STATOR DÉPLOYÉ

(30) Priorität: 25.05.2016 AT 504762016
(43) Veröffentlichungstag der Anmeldung: 29.11.2017
(73) Patentinhaber: B&R Industrial Automation GmbH, 5142 Eggelsberg (AT)
(72) Erfinder: FASCHANG, Leopold, 5142 Eggelsberg (AT); KLAPPAUF, Christof, 83404 Ainring (DE)
(74) Vertreter: Patentanwälte Pinter & Weiss OG

(56) Entgegenhaltungen:
- EP-A1- 0 989 656
- EP-A1- 2 744 095
- WO-A1-2008/026642
- JP-A- 2008 161 019
- US-A1- 2004 008 011
- US-A1- 2014 062 433

## Beschreibung

Die gegenständliche Erfindung behandelt ein Verfahren und einen Langstatorlinearmotor umfassend einen Stator mit einer Mehrzahl LLM-Spulen.

Ein Stator eines Langstatorlinearmotors (LLM) besteht aus einer Vielzahl von nebeneinander angeordneten LLM-Spulen, die zusammen den Stator des LLM bilden. Diese LLM-Spulen werden einzeln oder in Gruppen angesteuert, wobei es im Betrieb des Langstatorlinearmotors oftmals auch erwünscht oder notwendig ist die Polarität, d.h. die Stromrichtung der LLM-Spulen zu ändern. Durch das Ansteuern der LLM-Spulen wird ein bewegtes Magnetfeld erzeugt, das mit Erregungsmagneten (in der Regel Permanentmagnete) an einer Transporteinheit des LLM zusammenwirkt, um die Transporteinheit entlang des Stators zu bewegen. Der grundsätzliche Aufbau und die Funktion eines LLM ist dabei hinlänglich bekannt, weshalb hier nicht näher darauf eingegangen wird. Zum Bestromen der LLM-Spulen zur Erzeugung des Magnetfeldes wird eine Betriebsspannung zwischen einem ersten Betriebspotential und einem zweiten Betriebspotential zur Verfügung gestellt.

Eine Möglichkeit LLM-Spulen anzusteuern und eine Änderung der Polarität der Spulenspannung zu gewährleisten, wäre die Verwendung einer Vollbrücke, wie sie in der US 2006/0220623 A1 offenbart ist. Die Betriebsspannung wird dabei jeweils an den ersten und zweiten Zweig der Vollbrücke angelegt, die LLM-Spule wird in den Querzweig der Vollbrücke geschaltet. Durch geeignete Ansteuerung der vier Schalter (Bipolar-Transistoren, MOSFETs, IGBTs, etc.) der Vollbrücke kann an die LLM-Spulen eine gewünschte, bzw. durch eine Spulenregelung vorgegebene, Spulenspannung in gewünschter Polarität und Höhe an die LLM-Spulen angelegt werden. Um die LLM-Spulen einzeln ansteuern zu können, muss jede LLM-Spule mit einer Vollbrücke versehen werden. Dies bedeutet jedoch, dass pro LLM-Spule vier Schalter benötigt werden. Bei einer naturgemäß hohen Anzahl an LLM-Spulen eines LLM-Stators entstehen somit hohe Kosten und ein hoher schaltungstechnischer Aufwand durch die hohe Anzahl an Schaltern.

Die EP 0 989 656 A1 eine Regelung eines belastbaren Potentials eines rotativen Motors. Hingegen beschreibt die JP 2008 161019 A eine Ansteuerung eines Langstatorlinearmotor-Stators unter Verschaltung von Sternpunkten zwischen den einzelnen Statorsegmenten.

Es ist Aufgabe der gegenständlichen Erfindung ein Verfahren und eine Vorrichtung zum Ansteuern der LLM-Spulen eines LLM-Stators anzugeben, die mit geringerem Aufwand und schaltungstechnisch einfacher realisierbar sind und wobei auch die Polarität der Spulenspannung der LLM-Spulen wechselbar sein soll.

Diese Aufgabe wird erfindungsgemäß durch ein Verfahren gelöst, wobei ein erstes Betriebspotential an die n ersten Eingangsanschlüsse von n Halbbrücken angelegt wird, ein zweites Betriebspotential an die n zweiten Eingangsanschlüsse der n Halbbrücken angelegt wird, je Halbbrücke ein erster Schalter zwischen einem Mittelpunkt der jeweiligen Halbbrücke und dem ersten Eingangsanschluss geschaltet wird und je ein zweiter Schalter zwischen dem Mittelpunkt der betreffenden Halbbrücke und dem zweiten Eingangsanschluss geschaltet wird. Der Mittelpunkt der n Halbbrücken wird jeweils mit n ersten Anschlüssen der n LLM-Spulen verbunden. Die zweiten Anschlüsse der n LLM-Spulen werden zu einem Regelungspunkt verbunden und durch eine Regelungseinheit ein Istpotential an den Regelungspunkt auf ein vorgegebenes Potential geregelt.

Weiters wird die Aufgabe durch einen Langstatorlinearmotor gelöst, wobei am Langstatorlinearmotor eine Vorrichtung zum Ansteuern der Mehrzahl n LLM-Spulen mit n Halbbrücken mit jeweils einem ersten Eingangsanschluss und einem zweiten Eingangsanschluss vorgesehen ist, wobei pro Halbbrücke ein erster Schalter zwischen einem Mittelpunkt der Halbbrücke und dem ersten Eingangsanschluss vorgesehen ist und ein zweiter Schalter zwischen dem Mittelpunkt der Halbbrücke und dem zweiten Eingangsanschluss vorgesehen ist, und wobei die n ersten Eingangsanschlüsse mit einem ersten Betriebspotential verbunden sind, sowie die n zweiten Eingangsanschlüsse mit einem zweiten Betriebspotential verbunden sind, wobei jeder LLM-Spule eine Halbbrücke zugeordnet ist, wobei die n Mittelpunkte der n Halbbrücken jeweils mit einem ersten Anschluss der zugehörigen LLM-Spule verbunden sind, und wobei die zweiten Anschlüsse der n LLM-Spulen zu einem Regelungspunkt verbunden sind, wobei eine Regelungseinheit vorgesehen ist, die ausgestaltet ist ein Istpotential des Regelungspunkts auf ein vorgegebenes Potential zu regeln.

Durch Schließen der n ersten Schalter und Öffnen der n zweiten Schalter der n Halbbrücken wird jeweils eine Spulenspannung erster Polarität an die n LLM-Spulen bzw. durch Öffnen der n ersten Schalter und Schließen der n zweiten Schalter der n Halbbrücken jeweils eine Spulenspannung zweiter Polarität an die n LLM-Spulen angelegt. Das Verbinden der n ersten bzw. n zweiten Anschlüsse der n LLM-Spulen mit dem Mittelpunkt der n Halbbrücken bzw. dem Regelungspunkt muss natürlich nicht direkt, d.h. ohne weitere elektrische Bauteile, insbesondere passive Bauteile, zwischen den einzelnen Elementen erfolgen. Vorstellbar sind z.B. zusätzliche Drosseln als Filterelemente, und insbesondere Shunts zur Messung von Strömen durch die LLM-Spulen. Es werden pro LLM-Spule also lediglich zwei Schalter benötigt, was also einer Ersparnis an 2*n entspricht. Es ist jedoch zu beachten, dass eine größere Differenz zwischen erstem Betriebspotential und zweitem Betriebspotential, d.h. eine größere Betriebsspannung, benötigt wird, als bei einer Vollbrückenansteuerung.

Vorteilhafterweise entspricht das vorgegebene Potential der halben Betriebsspannung und/ oder ist das zweite Betriebspotential Null. Bei einer beispielhaft angenommenen Betriebsspannung von 60 V würde sich beim erfindungsgemäßen Verfahren somit ein vorgegebenes Potential, und damit eine Spulenspannung von plusminus 30 V ergeben, wogegen eine Vollbrückenansteuerung immer die gesamte Betriebsspannung (hier angenommene 60 V) positiv oder negativ an die LLM-Spule anlegt.

Vorteilhafterweise vergleicht eine Vergleichseinheit das Istpotential im Regelungspunkt C mit dem vorgegebenen Potential woraufhin die Regelungseinheit basierend auf einer Potentialdifferenz zwischen Istpotential und vorgegebenem Potential einen Strom, z.B. mittels einer Stromquelle, in den Regelungspunkt eingespeist um die Potentialdifferenz auf Null zu regeln. Die zweiten Anschlüsse der n LLM-Spulen werden miteinander verbunden, womit nur ein Istpotential eingestellt werden muss. Damit ist nur eine Regelungseinheit für alle LLM-Spulen notwendig.

Die Stromquelle kann eine Drossel und eine Spannungsquelle beinhalten, wobei die Drossel mit dem Regelungspunkt verbunden ist und den Strom über eine von der Spannungsquelle an der Drossel erzeugte Spannung erzeugt.

Die Spannungsquelle wiederum kann ein PWM-Modul und eine Treiberhalbbrücke beinhaltet, wobei das PWM-Modul die Treiberbrücke abhängig vom Differenzpotential regelt. Gerade für diese ist die Verwendung einer Drossel vorteilhaft, da diese eine von der Spannungsquelle gelieferte Spannung integriert und damit einen geglätteten Strom liefert. PWM-Module schalten Treiberhalbbrücken bekanntermaßen derart, dass Rechteckspannungen entstehen, die von der Drossel zu Dreiecksströmen gewandelt werden, und dabei entstandene Spannungsspitzen filtern.

Ganz besonders vorteilhaft ist eine Fertigung der Treiberhalbbrücke mit GaN-Schaltern. GaN-Schalter lassen eine sehr hohe Schaltfrequenz zu, womit die Baugröße der Drossel verringert werden kann.

Die Vergleichseinheit kann beispielsweise ein Widerstandsnetzwerk beinhalten, das mit dem ersten Betriebspotential, dem zweitem Betriebspotential und dem Regelungspunkt verbunden ist und aus dem ersten Betriebspotential, dem zweitem Betriebspotential und dem Istpotential am Regelungspunkt die Potentialdifferenz ermittelt. Ein derartiges Widerstandsnetzwerk erlaubt eine sehr einfache Ermittlung der Potentialdifferenz unter Verwendung von vier Widerständen.

Es kann zudem eine Umwandlungseinheit, die mit der Vergleichseinheit verbunden ist und das Differenzpotential in einen vorgegebenen Strom wandelt, ein Sensor, der den Iststrom im Regelungspunkt misst und ein Stromregler, der eingangsseitig mit der Umwandlungseinheit und dem Sensor verbunden ist, ausgangsseitig mit der Stromquelle verbunden ist, den vorgegebenen Strom von der Vergleichseinheit und den Iststrom vom Sensor erhält, einen Differenzstrom ermittelt und damit die Stromquelle regelt, vorhanden sein. Vorteilhafterweise ist die Umwandlungseinheit als PI-Regler, vorzugsweise als Transkonduktanzverstärker (Operational Transconductance Amplifier oder OTA) mit ausgangsseitigem RC-Glied gegen Masse ausgestaltet. Der ermittelte vorgegebene Strom dient als Referenz für den Stromregler, welcher vom Sensor auch den Iststrom erhält. Gibt es eine Abweichung zwischen dem vorgegebenen Strom und dem Iststrom, wird die Stromquelle angesteuert. So wird beispielsweise das PWM-Modul angesteuert, welcher der Treiberhalbbrücke die Schaltbefehle liefert womit der Differenzstrom zwischen dem vorgegebenen Strom und dem Iststrom wieder ausgeglichen wird. Damit wird wiederum das Differenzpotential ausgeglichen und das Istpotential auf das vorgegebene Potential geregelt.

Der Iststrom kann als um 360°/m phasenverschobene m Phasenströme in den Regelungspunkt eingespeist werden, wobei m>1. Hierzu können m Stromquellen, die die m Phasenströme liefern mit dem Regelungspunkt verbunden sein. Dies kann beispielsweise erfolgen, indem m Stromregler m PWM-Module phasenversetzt ansteuern, die wiederum m Treiberhalbbrücken phasenversetzt ansteuern, die die Phasenströme phasenversetzt jeweils über eine Drossel (also insgegesamt m Drosseln) in den Regelungspunkt einprägen. Falls als Stromquellen mehrere identische Halbbrücken samt Drossel dienen, ist es ausreichend, den Iststrom nur bei einer Halbbrücke zu messen und diesen den m Stromreglern zuzuführen.

Wenn das Einprägen des Iststroms in m>1 Phasen erfolgt, so ist es auch möglich die m Phasenströme abhängig von dem Differenzstrom teilweise oder zur Gänze abgeschaltet werden. So ist beispielsweise ein Lückbetrieb realisierbar. Sind der Differenzstrom und auch die Potentialdifferenz Null, so können alle Phasen deaktiviert werden, womit kein Iststrom in den Regelungspunkt eingespeist wird. Dadurch werden die Schaltverluste der Treiberhalbbrücken bei geringen Strömen vermieden. Auch kann bei geringem Differenzstrom nur eine Anzahl Phasen einen Phasenstrom liefern und bei Überschreiten bzw. Unterschreiten einer Differenzstromschwelle ein weiterer Phasenstrom dazu oder weg geschaltet werden.

Die gegenständliche Erfindung wird nachfolgend unter Bezugnahme auf die Figuren 1 bis 9 näher erläutert, die beispielhaft, schematisch und nicht einschränkend vorteilhafte Ausgestaltungen der Erfindung zeigen. Dabei zeigt
- Fig.1: eine Transporteinrichtung in Form eines Langstatorlinearmotors,
- Fig.2: eine Vollbrückenansteuerung einer LLM-Spule
- Fig.3: eine erfindungsgemäße Halbbrückenansteuerung einer LLM-Spule
- Fig.4: eine Ansteuerung von n LLM-Spulen mit n Halbbrücken
- Fig.5: eine Ansteuerung mit einer Ausgestaltung der Regelungseinheit
- Fig.6: eine detaillierte Ausgestaltung der Regelungseinheit
- Fig.7: eine Regelungseinheit mit dreiphasiger Stromregelung
- Fig.8a, b: eine Regelung mittels drei Phasenströmen
- Fig.9: den Iststrom abhängig von Ab- und An-Anschaltung von Phasenströmen

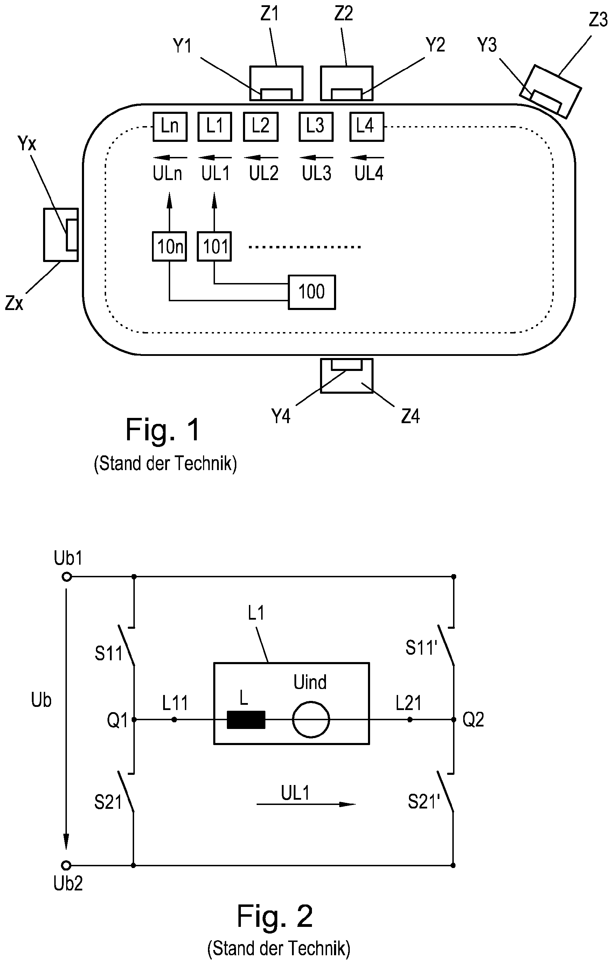

In Fig.1 ist eine Transporteinrichtung in Form eines Langstatorlinearmotors (LLM) beispielhaft dargestellt. Die Transporteinrichtung besteht hier nur aus einem Transportabschnitt, natürlich sind in der Praxis mehrere Transportabschnitte, auch nicht in sich geschlossene Bahnen bildende, die zur Transporteinrichtung zusammengestellt sind, möglich. Die Transporteinrichtung ist als LLM ausgeführt, bei dem ein Transportabschnitt in an sich bekannter Weise jeweils einen Teil eines Langstators eines LLM ausbildet. Ein Transportabschnitt kann dabei in bekannter Weise auch noch weiter unterteilt sein, beispielsweise in eine Anzahl von einzelnen Transportsegmenten in Form von Spulenbaugruppen mit einer Mehrzahl von LLM-Spulen. Entlang des Transportabschnitts ist daher in Längsrichtung in bekannter Weise eine Vielzahl von elektrischen LLM-Spulen L1,...,Ln angeordnet, die mit Erregungsmagneten Y1,...,Yn an den Transporteinheiten Z1 ... Zx zusammenwirken. In ebenso bekannterWeise wird mittels Spulenregelungseinheiten 101,10n durch Kontrolle der Spulenspannungen UL1,...,ULn, der einzelnen LLM-Spulen L1,...,Ln für jede der Transporteinheiten Z1 ... Zx unabhängig eine Vortriebskraft erzeugt, die die Transporteinheiten Z1 ... Zx in Längsrichtung entlang des Transportabschnitts entlang der Transportstrecke, bewegt. In der Regel wirken auf eine Transporteinheit Z1 ... Zx gleichzeitig mehrere LLM-Spulen L1,...,Ln, die gemeinsam die Vortriebskraft erzeugen. Aus Übersichtlichkeitsgründen sind in Fig. 1 nur einige LLM-Spulen L1,...,Ln und nur zwei Spulenregelungseinheiten 101,10n eingezeichnet. Natürlich wird jede Spulenspannung UL1,...,ULn jeder LLM-Spule L1,...,Ln mit einer Spulenregelungseinheit 101,10n geregelt, wobei mehrere Spulenregelungseinheit 101,10n auch in einer Einheit integriert sein können. Jede der Transporteinheiten Z1 ... Zx kann dabei mittels einer den Spulenregelungseinheiten 101,10n übergeordneten Transportsteuerung 100 individuell (Geschwindigkeit, Beschleunigung, Bahn, Richtung) und unabhängig (bis auf die Vermeidung von möglichen Kollisionen) von den anderen Transporteinheiten Z1 ... Zx bewegt werden. Dazu wird von der Transportsteuerung 100 oftmals für jede zu bewegende Transporteinheit Z1 ... Zx laufend eine Positionsvorgabe (äquivalent auch Geschwindigkeitsvorgabe) vorgegeben, die von den Spulenregelungseinheiten 101,10n in entsprechende, für die Bewegung benötigte Spulenspannungen UL1,...,ULn umgesetzt werden. Nachdem dieses grundlegende Prinzip eines Langstatorlinearmotors hinreichend bekannt ist, wird hier nicht näher darauf eingegangen.

Fig.2 zeigt eine Vollbrücke einer LLM-Spule L1 nach dem Stand der Technik. Dabei ist die LLM-Spule L1 als Induktivität L in Serie mit einer Spannungsquelle Uind modelliert. Die Spannungsquelle Uind beschreibt eine induzierte Spannung, z.B. für den Fall, dass eine Transporteinheit Z1 ... Zx des LLM mit Erregungsmagneten vorbeibewegt wird. Zudem weist die LLM-Spule L1 wie üblich einen ersten Spulenanschluss L11 und einen zweiten Spulenanschluss L12 auf. Die Vollbrücke besteht aus zwei Hauptzweigen, wobei der erste Hauptzweig aus zwei Schaltern S11, S21 besteht, die in Serie an einer Betriebsspannung Ub liegen, die durch die Differenz aus einem ersten Betriebspotential Ub1 und einem zweiten Betriebspotential Ub2 an den Eingangsanschlüssen der Vollbrücke gebildet wird. Auch der zweite Hauptzweig besteht aus zwei Schaltern S11', S21', die in Serie an der Betriebsspannung Ub liegen. Zwischen dem Verbindungspunkt des ersten Schalters S11 und des zweiten Schalters S21 des ersten Hauptzweiges befindet sich der erste Queranschluss Q1 für einen Querzweig. Äquivalent befindet sich zwischen dem Verbindungspunkt des ersten Schalters S11' und des zweiten Schalters S21' des zweiten Hauptzweiges der zweite Queranschluss Q2 des Querzweigs. Der erste Spulenanschluss L11 der LLM-Spule L1 ist mit dem ersten Queranschluss Q1 verbunden, der zweite Spulenanschluss L12 der LLM-Spule L1 ist mit dem zweiten Queranschluss Q2 verbunden. Durch geeignetes Ansteuern der Schalter S11, S21, S11', S21' kann eine Spulenspannung UL1 zwischen ersten Spulenanschluss L12 und zweiten Spulenanschluss L22 angelegt werden. Die Ansteuerung der Vollbrücke zur Erzeugung einer Spulenspannung UL1 sieht im Wesentlichen zwei Schalterstellungen vor. In der ersten Schalterstellung sind der erste Schalter S11 des ersten Hauptzweiges und der zweite Schalter S21' des zweiten Hauptzweiges geschlossen, wogegen der zweite Schalter S21 des ersten Hauptzweiges und der erste Schalter S11' des zweiten Hauptzweiges offen sind.

Damit liegt an der LLM-Spule L1 die Betriebsspannung Ub als Spulenspannung UL1 an. In der zweiten durch die Ansteuerung der Vollbrücke vorgesehenen Schalterstellung sind der erste Schalter S11 des ersten Hauptzweiges und der zweite Schalter S21' des zweiten Hauptzweiges offen, wogegen der zweite Schalter S21 des ersten Hauptzweiges und der erste Schalter S11' des zweiten Hauptzweiges geschlossen sind, womit die negative Betriebsspannung -Ub als Spulenspannung UL1 an der LLM-Spule L1 anliegt. So werden beide Polaritäten für die Spulenspannung UL1 der LLM-Spule L1 erreicht.

Natürlich besteht ein LLM-Stator nicht nur aus einer, sondern aus einer Vielzahl n von nebeneinander angeordneten LLM-Spulen L1,...,Ln. Um nun alle n LLM-Spulen L1,...,Ln einzeln ansteuern zu können, wäre je LLM-Spule L1,...,Ln eine Vollbrücke gemäß Fig.2 notwendig, d.h. dass damit 4*n Schalter S11, S21, S11', S21' benötigt werden, die üblicherweise als Halbleiterschalter, wie Bipolartransistoren, Mosfets, IGBTs, etc. ausgeführt sind. Nachteilig an dieser hohen Anzahl an Schaltern S11, S21, S11', S21' sind die hohen Kosten und der erhöhte Platzbedarf für die schaltungstechnische Umsetzung. Da bei einer hohen Anzahl an LLM-Spulen L1,...,Ln bereits viel Platz für die Leistungsbauteile benötigt wird, ist es wünschenswert weniger Schalter S11, S21, S11', S21' zu verwenden. Auch das Routing (Verdrahtung z.B. auf einer Platine) wird mit zunehmender Anzahl an Bauelementen immer komplizierter und je mehr Bauteile verwendet werden, desto höher ist die Chance für einen Ausfall eines Bauteils.

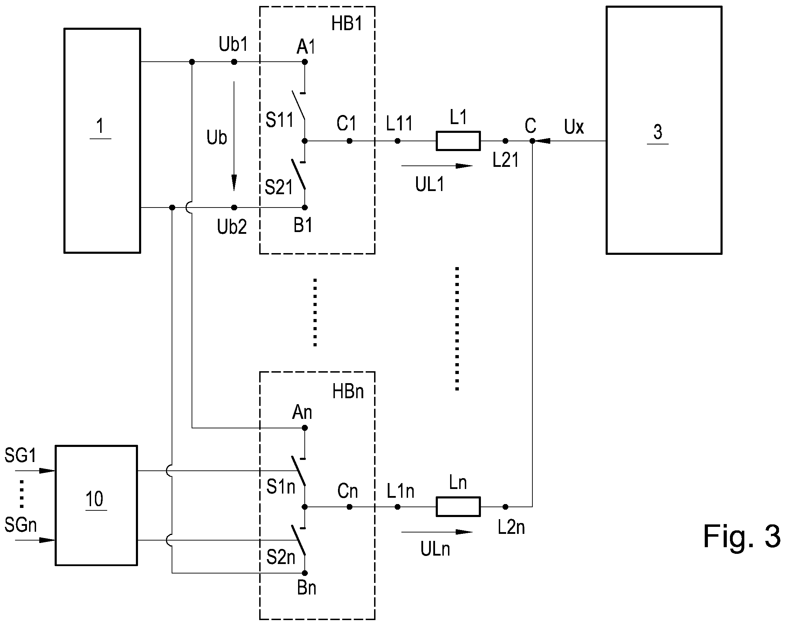

Daher wird erfindungsgemäß eine Ansteuerung der LLM-Spulen L1,...,Ln über n Halbbrücken HB1,...,HBn vorgeschlagen. In Fig.3 ist eine erfindungsgemäße Ansteuerung von n, wobei n eine ganze Zahl größer eins ist, LLM-Spulen L1,...,Ln mittels jeweils einer zugeordneten Halbbrücke HB1,...,HBn ersichtlich. Es wird auf die zweiten Hauptzweige der Vollbrücken verzichtet, womit die Betriebsspannung Ub nur an den ersten Hauptzweigen, also pro Halbbrücke HB1,...,HBn zwischen den ersten Eingangsanschlüssen A1,...,An und zweiten Eingangsanschlüssen B1,...,Bn und den dazwischen in Serie geschalteten ersten Schaltern S11,...S1n und zweiten Schaltern, S21,...S2n, anliegt. Der jeweilige Verbindungspunkt zwischen ersten S11,...S1n und zweiten Schaltern, S21,...S2n wird jeweils als Mittelpunkt C1,...Cn bezeichnet und ist jeweils mit dem ersten Anschluss L11,...,Ln1 einer LLM-Spule L1,...,Ln verbunden. Der jeweils zweite Anschluss L12,...,Ln2 der jeweiligen LLM-Spule L1,...,Ln liegt auf einem von einer Regelungseinheit 3 vorgegebenen elektrischen Potential Ux. Die zweiten Anschlüsse L12,...,Ln2 der LLM-Spulen L1,...,Ln sind somit in einem Regelungspunkt C miteinander verbunden.

Die Ansteuerung der Schalter S11, S21,..., S1n, S2n der n Halbbrücken HB1,..., HBn erfolgt durch eine Spulenregelungseinheit 10 (in Fig.3 aus Übersichtsgründen nur für die Schalter S1n, S2n eingezeichnet). Die Spulenregelungseinheit 10 steuert die Schalter S11, S21,..., S1n, S2n in bekannter Weise derart, dass durch Bestromen der LLM-Spulen L1,...,Ln, mit den Spulenströmen IL1,...,ILn, bzw. durch Anlegen der Spulenspannungen UL1,...,ULn, das für die Bewegung einer Transporteinheit benötigte Magnetfeld erzeugt wird. Dazu kann die Spulenregelungseinheit 10 auch Sollgrößen SG1,...SGn für die Regelung erhalten, z.B. von einer Transportsteuerung 100 wie in Fig.1.

In der Regel werden bei einem LLM eine Anzahl von LLM-Spulen L1,...,Ln zu einem Statorsegment zusammengefasst (auch physisch in Form eines Bauteils). Alle LLM-Spulen L1,...,Ln eines Statorsegments werden dann in der Regel durch eine Spulenregelungseinheit 10, mit einzelnen Spulenregelungseinheiten 101,10n fürjede LLM-Spule L1,...,Ln, geregelt, wobei das für die Erfindung nicht entscheidend ist. Daher ist es auch vorteilhaft, alle LLM-Spulen L1,...,Ln eines Statorsegments wie in Fig.3 schaltungstechnisch zusammenzufassen, also ausgangsseitig in einem Regelungspunkt C miteinander zu verbinden. Demnach benötigt man für einen Langstatorlinearmotor mit mehreren Statorsegmenten auch mehrere Schaltungen wie in Fig.3.

Die Ansteuerung der Schalter S11,...,S1n, S21,...,S2n sieht nun zwei Schalterstellungen vor. In der ersten Schalterstellung ist der erste Schalter S11,...S1n geschlossen und der zweite Schalter S21,...,S2n offen, womit sich die Spulenspannung UL1 aus der Differenz aus erstem Betriebspotential Ub1 und dem vorgegebenen Potential Ux ergibt: UL1=Ub1-Ux. In der zweiten Schalterstellung ist der erste Schalter S11,...,S1n offen und der zweite Schalter S21,...,S2n geschlossen, womit sich die Differenz aus vorgegebenen Potential Ux und zweitem Betriebspotential Ub2 ergibt: UL1=Ux-Ub2. Es ist klar ersichtlich, dass sich bei unterschiedlichen Schalterstellungen unterschiedliche Polaritäten der Spulenspannung UL1 ergeben. Das gilt für alle LLM-Spulen L1,...,Ln analog.

Für den Spezialfall, dass das zweite Betriebspotential Ub2 auf Masse liegt (Ub2=0), und dass das vorgegebene Potential Ux der halben Betriebsspannung Ub entspricht (Ux=Ub/2), so ergibt sich in der ersten Schalterstellung eine Spulenspannung UL1 von Ub/2 und in der zweiten Schalterstellung eine Spulenspannung UL1 von -Ub/2.

Da, wie erwähnt, ein LLM-Stator bzw. ein Teil eines LLM-Stators aus n LLM-Spulen besteht, werden n Halbbrücken HB1,...,HBn in einer Bauart wie oben beschrieben für n LLM-Spulen L1,...,Ln verwendet, womit sich gegenüber der zuvor beschriebenen Vollbrückenansteuerung nach Stand der Technik eine Ersparnis von 2*n Schaltern ergibt.

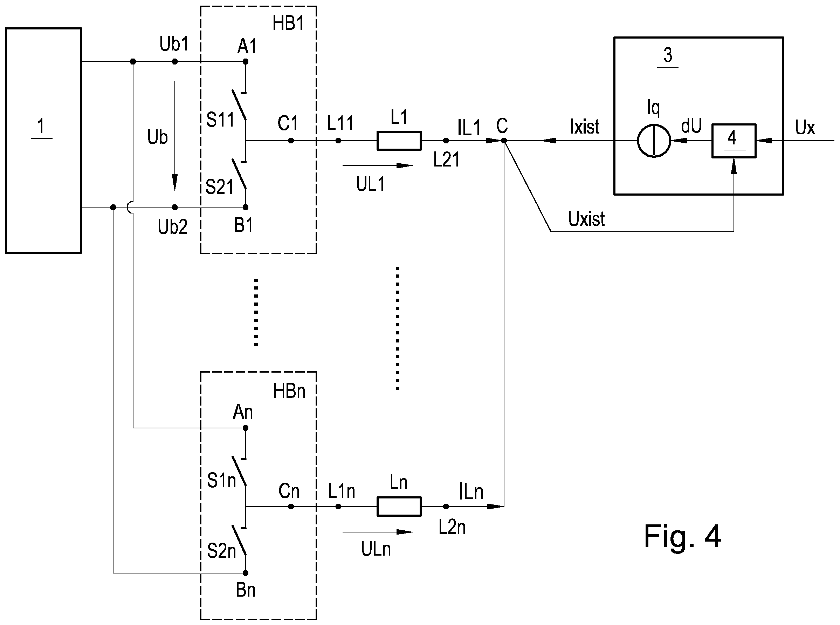

Wie in Fig.4 dargestellt, werden die zweiten Spulenanschlüsse L21,...,L2n, die ja alle auf dem vorgegebenen Potential Ux gehalten werden, miteinander zu einem Regelungspunkt C verbunden. Die LLM-Spulen UL1,...,ULn werden alle unabhängig voneinander geregelt. Im Allgemeinen weist jede Spule L1,..., Ln eine unterschiedliche Spulenspannung UL1,...,ULn und Spulenströme IL1... ILn auf. Ist eine Spulenspannung UL1,...,ULn positiv, so fließt ein Spulenstrom IL1,...,ILn von der betreffenden Spule L1,...,Ln in den Regelungspunkt C und das Istpotential Uxist steigt. Ist eine Spulenspannung UL1,...,ULn negativ, so fließt demzufolge ein Spulenstrom IL1,...,ILn aus dem Regelungspunkt C heraus in die betreffende Spule L1,...,Ln und das Istpotential Uxist sinkt. Die Summe aller Spulenströme IL1,...,ILn durch die LLM-Spulen UL1,...,ULn hat demnach ein Ansteigen oder ein Fallen des Istpotentials Uxist zufolge, was durch die Regelungseinheit 3 ausgeglichen wird, um das Istpotential Uxist auf einem vorgegebenen Potential Ux zu halten.

Eingangsseitig befindet sich eine Spannungsquelle 1, z.B. ein Gleichrichter, die das erste Betriebspotential Ub1 und das zweite Betriebspotential Ub2 den n Halbbrücken HB1,...,HBn zur Verfügung stellt. Die Schalter S11, S21,...,S1n, S2n der n Halbbrücken HB1,...,HBn werden von der Spulenregelungseinheit 10 (in Fig.4 nicht eingezeichnet) je nach gewünschter Polarität der Spulenspannungen UL1,...,ULn in einer Art angesteuert, wie schon oben für eine LLM-Spule L1 beschrieben.

Die Regelungseinheit 3 dient zum Einstellen des vorgegebenen Potentials Ux am Regelungspunkt C, wobei das aktuelle Istpotential Uxist erfasst (z.B. gemessen) wird und der Regelungseinheit 3 vorliegt. Die Regelungseinheit 3 steuert in einer Ausgestaltung abhängig von einer von einer Vergleichseinheit 4 ermittelten Potentialdifferenz dU zwischen vorgegebenem Potential Ux und Istpotential Uxist eine Stromquelle Iq an, welche den Iststrom Ixist in den Regelungspunkt C einspeist, der damit auch über die n LLM-Spulen L1,...,Ln fließt. Natürlich kann der über die einzelnen n LLM-Spulen L1,...,Ln fließende Spulenstrom IL1 ,...,ILn positiv oder auch negativ sein. Da der Iststrom Ixist abhängig von der Potentialdifferenz dU geändert wurde und in den Regelungspunkt C eingespeist wird, ändert sich auch das Istpotential Uxist und wird im Rahmen der Regelung an das vorgegebene Potential Ux angepasst, womit die Potentialdifferenz dU vorzugsweise auf Null geregelt wird. Es kann aber auch auf eine vorgegebene Potentialdifferenz dU ungleich Null geregelt werden. Die Vergleichseinheit 4 kann wie in Fig. 4 dargestellt integraler Bestandteil der Regelungseinheit 3 sein oder auch als separate Einheit ausgegliedert sein.

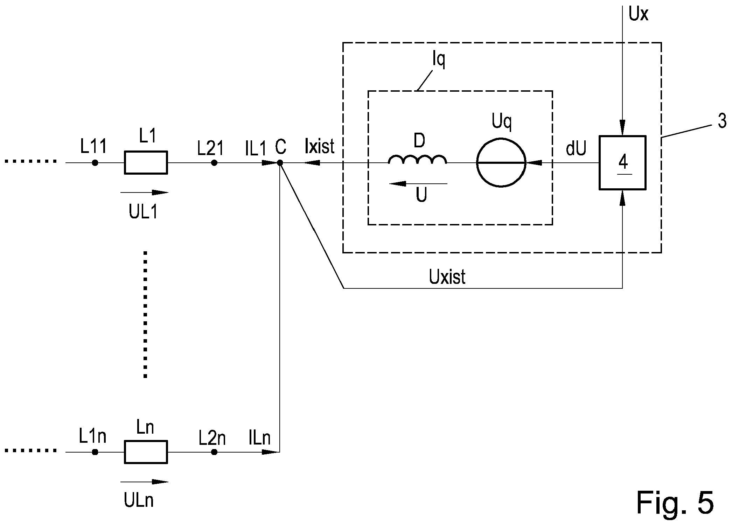

Eine vorteilhafte Ausgestaltung der Regelungseinheit 3 ist in Fig.5 dargestellt. Hier wird die Stromquelle Iq durch eine Spannungsquelle Uq und eine Drossel D (Induktivität) realisiert. Die Spannungsquelle Uq erzeugt die Spannung U an der Drossel D und ruft damit den Iststrom Ixist in der Drossel D hervor, welcher in den Regelungspunkt C eingespeist wird, womit die Istspannung Uxist am Regelungspunkt C beeinflusst wird.

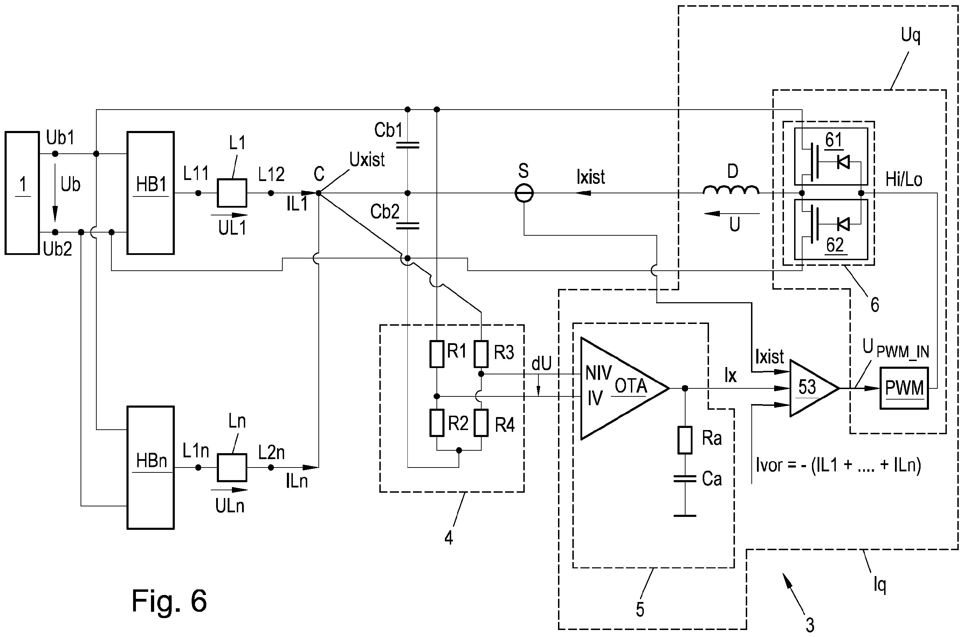

Fig.6 zeigt eine erfindungsgemäße Vorrichtung mit einer bevorzugten Ausführung der Vergleichseinheit 4 und der Spannungsquelle Uq, sowie einer Umwandlungseinheit 5, die hier integraler Bestandteil der Stromquelle Iq ist. Die Vergleichseinheit 4 stellt hier eine Widerstandsbrückenschaltung dar, die mit dem ersten Betriebspotential Ub1, dem zweiten Betriebspotential Ub2 und dem Regelungspunkt C verbunden ist. Hierzu wird über einen ersten Widerstandsbrückenzweig das erste Betriebspotential Ub1 über einen ersten Widerstand R1 in Serie mit einem zweiten Widerstand R2 mit dem zweiten Betriebspotential Ub2 verbunden. Ein zweiter Widerstandsbrückenzweig verbindet über einen dritten Widerstand R3 und einen in Serie geschalteten vierten Widerstand R4 den Regelungspunkt C mit dem zweiten Betriebspotential Ub2. Zwischen dem Verbindungspunkt des ersten Widerstands R1 und des zweiten Widerstands R2 und dem Verbindungspunkt des dritten Widerstands R3 und des vierten Widerstands R4 liegt bei geeigneter Dimensionierung der Widerstände R1, R2, R3, R4 das Differenzpotential dU zwischen vorgegebenem Potential Ux und Istpotential Uxist an. Um ein vorgegebenes Potential von Ux=(Ub1-Ub2)/2 zu erzielen, wäre beispielsweise eine Dimensionierung von R2=R3=R4=(1/3)R1 erforderlich. Selbstverständlich könnte das vorgegebene Potential Ux auch extern, beispielsweise durch regelbare Spannungsquellen vorgegeben werden. Die Realisierung durch Verbindungen zu den Betriebspotentialen Ub1, Ub2 erweist sich jedoch als besonders einfach. Ebenso sind in Fig.6 optionale Filterkondensatoren Cb1, Cb2 zwischen jeweils dem ersten Betriebspotential Ub1 bzw. dem zweiten Betriebspotential Ub2 und dem Regelungspunkt C vorhanden. Das Differenzpotential dU wird von der Vergleichseinheit 4 an die Umwandlungseinheit 5 geliefert. Die Umwandlungseinheit 5 wandelt das Differenzpotential dU in einen vorgegebenen Strom Ix. Die Umwandlungseinheit 5 kann durch einen PI-Regler, z.B. wie in Fig. 6 dargestellt durch einen Transkonduktanzverstärker (Operational Transconductance Amplifier) OTA mit einem ausgangsseitigen RC-Glied gegen Masse realisiert werden. Hierzu wird das Differenzpotential dU zwischen invertierendem Eingang IV, des Transkonduktanzverstärkers OTA und dem nicht invertierenden Eingang NIV des Transkonduktanzverstärkers OTA geschaltet. Der Transkonduktanzverstärker OTA liefert am Ausgang, der mittels der RC-Schaltung mit Masse verbunden ist, einen vorzugebenden Strom Ix, der proportional zum Differenzpotential dU ist. Die Spannung am Kondensator Ca steigt mit dem Integral des vorzugebenden Stroms Ix, die Spannung am Widerstand Ra ist proportional dem vorzugebenden Strom Ix. Alternativ ist natürlich auch z.B. eine OPV-Schaltung mit einem Kondensator und einem seriellen Widerstand als Rückkopplung auf den invertierenden Eingang als PI-Regler einsetzbar. Parallel zu dem Kondensator und dem Widerstand kann auch ein weiterer Kondensator zur Dämpfung von hochfrequenten Störungen vorgesehen sein. Weiters misst ein Sensor S in dieser Ausgestaltung nicht das Istpotential Uxist , sondern den Iststrom Ixist durch den Regelungspunkt C. Somit kann der Sensor S in einfacher Weise als Shunt realisiert werden. Ein Stromregler 53 vergleicht den vorgegebenen Strom Ix und den vom Sensor S erhaltenen Iststrom Ixist, ermittelt den Differenzstrom. Vorzugsweise ist der Stromregler 53 als PI-Regler ausgestaltet. Die Stromquelle Iq besteht in dieser Ausgestaltung neben dem Stromregler 53 aus einer Drossel D und einer Spannungsquelle Uq, welche wiederum aus einer von einem PWM-Modul PWM angesteuerten Treiberhalbbrücke 6 besteht, die abhängig vom Differenzstrom die Steuerspannung U_{PWM_IN} vom Stromregler 53 erhält. PWM bedeutet bekanntermaßen Pulsweitenmodulation, bzw. Pulse Width Modulation. Damit wird vom Stromregler 53 die Steuerspannung U_{PWM_IN} erzeugt und das PWM-Modul PWM steuert die Treiberhalbbrücke 6 so an, dass der Differenzstrom auf Null geregelt wird. Vorteilhafterweise weist der Stromregler 53 eine Stromvorsteuerung mit einem Stromvorsteuereingang, durch welchen der Vorsteuerstrom Ivor fließt, auf. Diese Stromvorsteuerung dient zur Entlastung der Regelungseinheit 3, hier insbesondere des PI-Regler, bzw. Transkonduktanzverstärkers OTA. Mit einer Vorsteuerung wird bekanntermaßen eine Stellgröße mit einem Wert beaufschlagt, der unabhängig von den Zuständen der Regelstrecke und daraus resultierenden Messungen ist, womit die Berücksichtigung des aufgrund des Sollwertverlaufs zu erwartenden Stellgrößen-Bedarfs ermöglicht wird. Der Vorsteuerstrom Ivor der Stromvorsteuerung kann mithilfe eines Modells, z.B. über die Knotenregel im Regelungspunkt C, berechnet werden. In diesem Fall würde beispielsweise die Summe aller Spulenströme IL1 ... ILn dem negativen Vorsteuerstrom -Ivor entsprechen, wie auch in Fig. 6 angedeutet. Die Treiberhalbbrücke 6 besteht hier aus zwei in Serie geschalteten Halbleiterschaltern 61,62. Vorteilhafterweise verbindet der obere Halbleiterschalter 61 das erste Betriebspotential Ub1 mit dem zweiten Halbleiterschalter 62, welcher wiederum mit dem zweiten Betriebspotential Ub2 verbunden ist. Die Drossel D verbindet den Regelungspunkt C mit dem Verbindungspunkt zwischen erstem Halbleiterschalter 61 und zweitem Haltleiterschalter 62 der Treiberhalbbrücke 6. Das PWM-Modul PWM schaltet mit einem Hi-Signal den ersten Halbleiterschalter 61, der damit das erste Betriebspotential Ub1 an die Drossel D anlegt, gleichermaßen wird bei einem Lo-Signal das zweite Betriebspotential Ub2 an die Drossel D angelegt. Dadurch wird in Abhängigkeit vom durch den Stromregler 53 ermittelten Steuerspannung U_{PWM_IN} eine Spannung U an die Drossel D angelegt, welche wiederum den Iststrom Ixist im Regelungspunkt C beeinflusst. Die Drossel D integriert die rechteckige Spannung U auf und erzeugt einen dreieckigen Iststrom Ixist, der geglättet ist. Die Halbleiterschalter 61, 62 der Treiberhalbbrücke sind vorteilhafterweise als GaN (Gallium Nitrit)-Schalter ausgeführt sind. Diese Technologie ermöglicht Schaltfrequenzen im MHz-Bereich, womit eine Drossel D mit geringerer Induktivität und damit geringerer Baugröße verwendet werden kann.

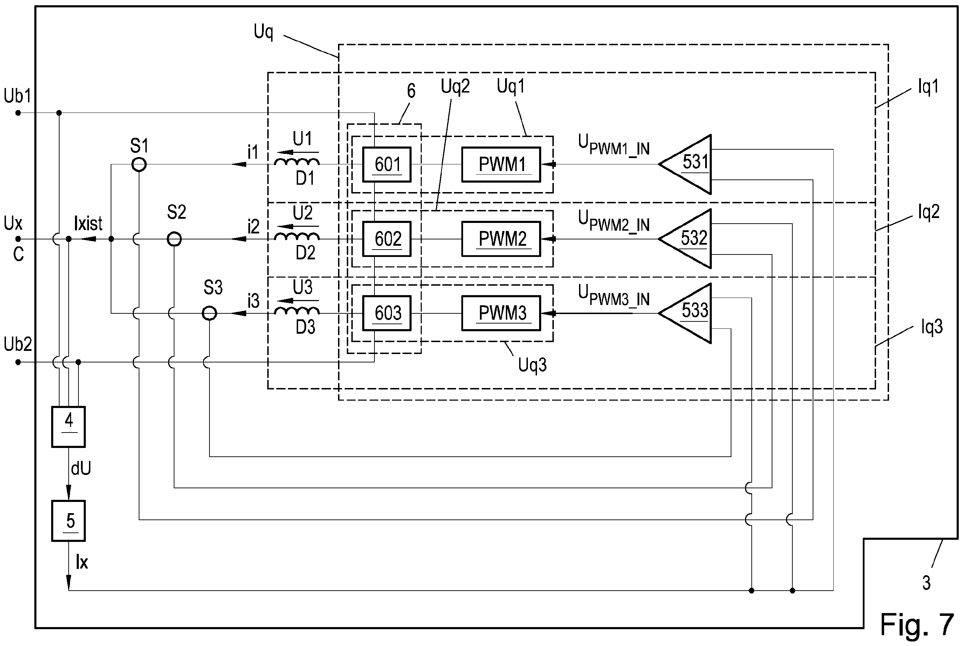

Vorteilhafterweise werden m>1, mit m als positive ganze Zahl, parallele Treiberhalbbrücken 6, verwendet, um die Welligkeit und damit die Stromrippel des Iststroms Ixist zu verringern, wie in Fig.7 am Beispiel von drei parallelen Treiberhalbbrücken 6 erläutert wird. Damit sind ebenso m Drosseln D1, D2, D3 erforderlich, die jeweils eine ein m-tel so große Induktivität aufweisen müssen, als die Induktivität der einphasigen Ausführung. Aus der Sprungantwort des Iststromes Ixist ist ersichtlich, dass der Iststroms Ixist bei m parallel geschalteten Induktivitäten m mal so schnell ansteigt und somit der vorgegebene Strom Ix schneller erreicht werden kann.. Der Hauptvorteil in der Verwendung mehrerer Treiberhalbbrücken 6 liegt jedoch in der Reduktion der erzeugten Verlustleistung. Da die Verlustleistung bekanntermaßen quadratisch zum Iststrom Ixist ist, bewirkt beispielsweise eine Drittelung des Iststromes Ixist eine Reduzierung der Verlustleistung um den Faktor Neun. Es sind natürlich auch m Stromregler 531, 532, 533 und Stromquellen Iq1, Iq2, Iq3 notwendig. Die Stromquellen Iq1, Iq2, Iq3 werden derart angesteuert, dass sie Ströme i1, i2, i3 mit einem Phasenversatz von 360°/m liefern, die in den Regelungspunkt C eingeprägt werden, was in Summe zum Iststrom Ixist im Regelungspunkt C führt.

In Fig.7 ist eine Ausgestaltung mit m=3 Treiberhalbbrücken 601, 602,603 und m=3 Stromquellen Iq1, Iq2, Iq3 dargestellt. Die m=3 Stromquellen bestehen aus m=3 Drosseln D1, D2, D3 und m=3 Spannungsquellen Uq1, Uq2, Uq3, die Spannungsquellen Uq1, Uq2, Uq3 wiederum setzen sich aus m=3 PWM-Modulen PWM1, PWM2, PWM3 und m=3 Treiberhalbbrücken 601, 602, 603 zusammen. Sofern die m=3 Treiberhalbbrücken 601, 602, 603 identisch sind, wäre theoretisch auch ein Sensor S zur Erfassung des Iststromes Ixist ausreichend. Da dieser Idealfall von absolut identischen Treiberhalbbrücken 601, 602, 603 (und Drosseln D1, D2, D3, usw.) in der Realität in der Regel nicht auftritt, zeigt die Fig.7 den allgemeinen Fall von m=3 Sensoren S1, S2, S3. Die Umwandlungseinheit 5 ist in der Ausführung nach Fig. 7 nicht integraler Bestandteil der Stromquellen Iq1, Iq2, Iq3. Es wäre auch vorstellbar, wie in der Ausführung nach Fig. 6 die Umwandlungseinheit 5 als integralen Bestandteil der Stromquellen Iq1, Iq2, Iq3 auszuführen, wobei jedoch drei Umwandlungseinheiten 5 notwendig wären.

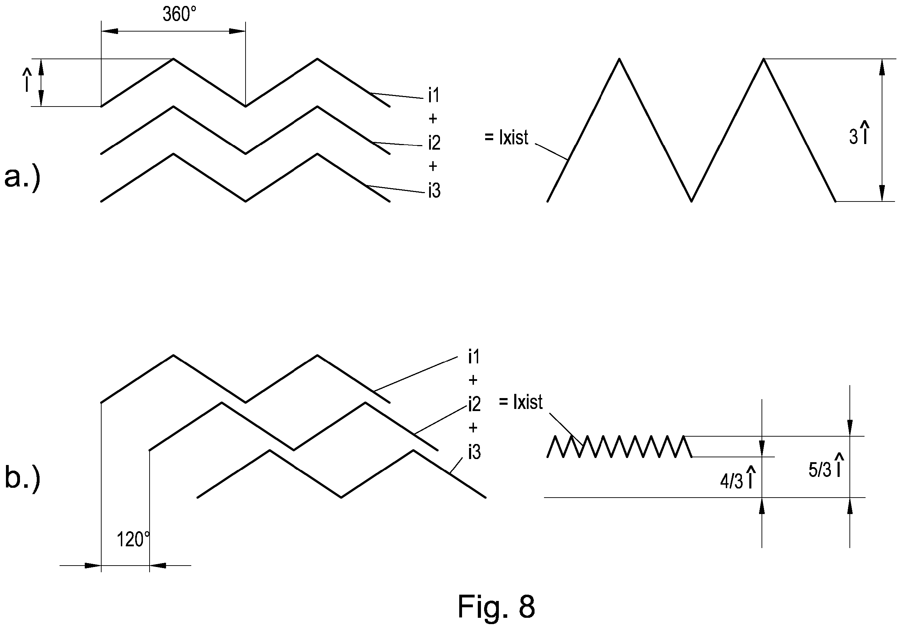

Fig.8a zeigt einen Verlauf der m=3 Ströme i1, i2, i3 und den daraus resultierenden Iststrom Ixist bei einer Verwendung von m=3 Stromquellen Iq1, Iq2, Iq3 ohne Phasenverschiebung. Die ursprünglichen rechteckförmigen Verläufe der von den Spannungsquellen Uq1 Uq2, Uq2 erzeugten Spannungen U1, U2, U3 werden von den m=3 Drosseln D1, D2, D3 jeweils zu dreieckförmigen Stromverläufen der m=3 Ströme i1, i2, i3 integriert. In Fig. 8a ist eine Ansteuerung mit drei Treiberhalbbrücken 601, 602, 603 ohne Phasenverschiebung (entspricht qualitativ einer Ansteuerung mit einer Treiberhalbbrücke 601, 602, 603, die den Iststrom Ixist liefert) dargestellt. Es ist in Fig.8b ersichtlich, dass bei einer um 360°/3=120° phasenverschobenen Ansteuerung der m=3 Ströme i1, i2, i3 die Stromrippel des Iststroms Ixist ein Neuntel so groß sind wie bei nicht phasenverschobener Ansteuerung. Bei nicht phasenverschobener Ansteuerung ist der Stromrippel des Iststroms Ixist drei mal so groß wie ein Spitzenstrom einer Phase î, wogegen der Rippelstrom des Iststroms Ixist bei phasenverschobener Ansteuerung (5/3 - 4/3)*î ist, was einem Drittel des Spitzenstroms einer Phase î entspricht.

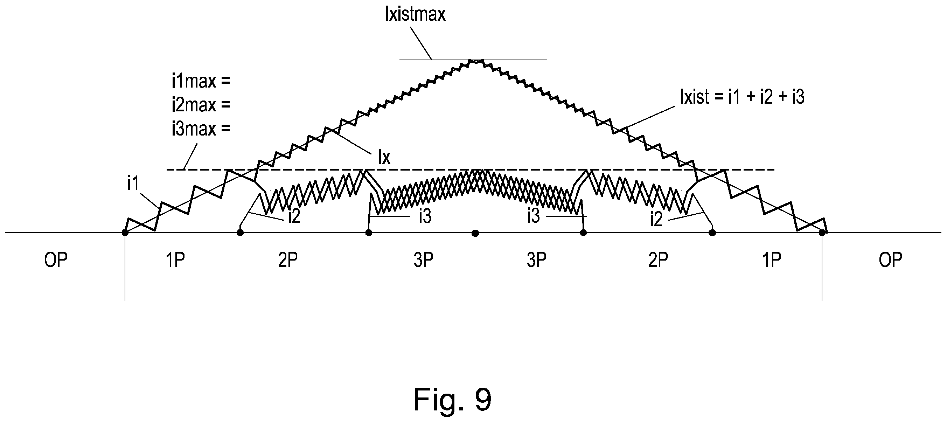

Wenn das Einprägen des Iststroms Ixist durch m Phasenströme i1, i2, i3 in m Phasen erfolgt, so ist es auch möglich die m Phasenströme i1, i2, i3 abhängig von dem Differenzstrom, bzw. der daraus resultierenden Steuerspannung U_{PWM_IN} teilweise oder zur Gänze ab oder an zu schalten, wie Fig. 9 schematischerweise zeigt. Jede der m Stromquellen Iq kann einen maximalen Phasenstrom i1max, i2max, i3max liefern, die in Fig.9 identisch sind. Der maximale von der Regelungseinheit 3 in den Regelungspunkt C lieferbare Iststrom Ixistmax ist demzufolge m mal so hoch, sofern die maximalen Phasenströme i1max, i2max, i3max gleich groß sind, ansonsten ergibt sich der maximale lieferbare Iststrom Ixistmax aus der Summe der Phasenströme i1max, i2max, i3max. Soll aufgrund eines Differenzstroms von Null, bzw. der daraus resultierenden Steuerspannung U_{PWM_IN}, ein Iststrom Ixist von Null ausgegeben werden, so werden alle Stromquellen Iq abgeschaltet, um ein vorgegebenes Potential von Ux zu halten. Steigt oder sinkt das Istpotential Uxist über eine bestimmte Schwelle, so wird ein Phasenstrom i1, i2, i3 dazu geschaltet. Ist ein vorgegebener Strom Ix erforderlich, der den maximalen Phasenstrom i1max, i2max, i3max überschreitet, so muss ein zweiter Phasenstrom i1, i2, i3 hinzu geschaltet werden, unterschreitet der vorgegebene Strom Ix eine bestimmte, Schwelle, so kann ein Phasenstrom i1, i2, i3 abgeschaltet werden, usw. Sobald ein Phasenstrom i1, i2, i3 dazu geschaltet wird, steigt der Proportionalanteil der Umwandlungseinheit 5, sodass der Iststrom Ixist sofort abfällt. In Fig. 9 ist die erste Phase (erster Phasenstrom i1) aktiv (Bereich 1P) und es wird erst die zweite Phase (zweiter Phasenstrom i2, Bereich 2P) und dann die dritte Phase (dritter Phasenstrom i3 dazu geschaltet, Bereich 3P) und danach erst die dritte Phase (Bereich 2P), dann die zweite Phase (Bereich 1P) und schlussendlich auch die erste Phase abgeschaltet. Null aktive Phasen bedeuten einen Lückbetrieb, der in Fig.9 als Bereich 0P gekennzeichnet ist.

## Patentansprüche

1. Verfahren zum Ansteuern einer Mehrzahl n LLM-Spulen (L1,...,Ln) eines Langstatorlinearmotor-Stators, **dadurch gekennzeichnet, dass** ein erstes Betriebspotential (Ub1) an n erste Eingangsanschlüsse (A1,...,An) von n Halbbrücken (HB1,...,HBn) angelegt wird, ein zweites Betriebspotential (Ub2) an n zweite Eingangsanschlüsse (B1,... Bn) der n Halbbrücken angelegt wird, **dass** je Halbbrücke (HB1,...,HBn) ein erster Schalter (S11,...S1n) zwischen einem Mittelpunkt (C1,...,Cn) der jeweiligen Halbbrücke (HB1,...,HBn) und dem ersten Eingangsanschluss (A1,..., An) geschaltet wird und je ein zweiter Schalter (S21,... ,S2n) zwischen dem Mittelpunkt (C1,...,Cn) der betreffenden Halbbrücke (HB1,...,HBn) und dem zweiten Eingangsanschluss (B1,...,Bn) geschaltet wird,
**dass** der Mittelpunkt (C1,...,Cn) der n Halbbrücken jeweils mit n ersten Anschlüssen (L11,...,L1n) der n LLM-Spulen (L1,...,Ln) verbunden wird, **und dass** die zweiten Anschlüsse (L11,... ,L1n) der n LLM-Spulen (L1,...,Ln) in einem Regelungspunkt (C) verbunden werden, der auf ein vorgegebenes Potential (Ux) geregelt wird.

2. Verfahren nach Anspruch 1, **dadurch gekennzeichnet, dass** das vorgegebene Potential (Ux) der halben Potentialdifferenz zwischen erstem Betriebspotential (Ub1) und zweitem Betriebspotential (Ub2) entspricht.

3. Verfahren nach Anspruch 1 oder 2, **dadurch gekennzeichnet, dass** das zweite Betriebspotential (Ub2) Null ist.

4. Verfahren nach einem der Ansprüche 1 bis 3, **dadurch gekennzeichnet, dass** ein Istpotential (Uxist) am Regelungspunkt (C) erfasst und mit dem vorgegebenen Potential (Ux) verglichen wird **und dass** basierend auf einer Potentialdifferenz (dU) zwischen Istpotential (Uxist) und vorgegebenem Potential (Ux) ein Iststrom (Ixist) in den Regelungspunkt (C) eingespeist wird, um die Potentialdifferenz (dU) auf einen vorgegebenen Wert zu regeln.

5. Verfahren nach Anspruch 4, **dadurch gekennzeichnet, dass** der Iststrom (Ixist) aus m um 360°/m phasenverschobene Phasenströme (i1, i2, i3) zusammengesetzt in den Regelungspunkt (C) eingespeist wird.

6. Verfahren nach Anspruch 5, **dadurch gekennzeichnet, dass** die m>1 Phasenströme (i1, i2, i3) abhängig von der Potentialdifferenz (dU) teilweise oder zur Gänze ab- bzw. angeschaltet werden.

7. Langstatorlinearmotor umfassend einen Langstatorlinearmotor-Stator mit einer Mehrzahl n von LLM-Spulen (L1,...,Ln), **dadurch gekennzeichnet, dass** am Langstatorlinearmotor eine Vorrichtung zum Ansteuern der Mehrzahl n LLM-Spulen (L1,...,Ln) mit n Halbbrücken (HB1,...,HBn) mit jeweils einem ersten Eingangsanschluss (A1,...,An) und einem zweiten Eingangsanschluss (B1,...,Bn) vorgesehen ist, wobei pro Halbbrücke (HB1,...,HBn) ein erster Schalter (S11,... ,S1n) zwischen einem Mittelpunkt (C1,...,Cn) der Halbbrücke und dem ersten Eingangsanschluss (A1,...,An) vorgesehen ist und ein zweiter Schalter zwischen dem Mittelpunkt (C1,...,Cn) der Halbbrücke und dem zweiten Eingangsanschluss (B1,...,Bn) vorgesehen ist, und wobei die n ersten Eingangsanschlüsse (A1,...,An) mit einem ersten Betriebspotential (Ub1) verbunden sind, sowie die n zweiten Eingangsanschlüsse (B1,...,Bn) mit einem zweiten Betriebspotential (Ub2) verbunden sind, **dass** jeder LLM-Spule (L1,...,Ln) eine Halbbrücke (HB1,...,HBn) zugeordnet ist, wobei die n Mittelpunkte (C1,...,Cn) der n Halbbrücken jeweils mit einem ersten Anschluss (L11,... ,L1n) der zugehörigen LLM-Spule (L1,...,Ln) verbunden sind, **dass** die zweiten Anschlüsse (L11,... ,L1n) der n LLM-Spulen (L1,...,Ln) zu einem Regelungspunkt (C) verbunden sind **und dass** eine Regelungseinheit (3) vorgesehen ist, die ausgestaltet ist ein Istpotential (Uxist) des Regelungspunkts (C) auf ein vorgegebenes Potential (Ux) zu regeln.

8. Langstatorlinearmotor nach Anspruch 7, **dadurch gekennzeichnet, dass** eine Vergleichseinheit (4) vorgesehen ist, wobei die Vergleichseinheit (4) ausgestaltet ist die Potentialdifferenz (dU) zwischen vorgegebenen Potential (Ux) und Istpotential (Uxist) im Regelungspunkt (C) zu ermitteln **und dass** in der Regelungseinheit (3) eine Stromquelle (Iq) vorgesehen ist, die abhängig von der Potentialdifferenz (dU) einen Iststrom (Ixist) in den Regelungspunkt (C) einspeist um die Potentialdifferenz (dU) auf einen vorgegebenen Wert zu regeln.

9. Langstatorlinearmotor nach Anspruch 8, **dadurch gekennzeichnet, dass** die Stromquelle (Iq) eine Drossel (D) und eine Spannungsquelle (Uq) beinhaltet, wobei die Drossel (D) mit dem Regelungspunkt (C) verbunden ist und ausgestaltet ist den Iststrom (Ixist) über eine von der Spannungsquelle (Uq) an der Drossel (D) erzeugte Spannung (U) zu erzeugen.

10. Langstatorlinearmotor nach Anspruch 9, **dadurch gekennzeichnet, dass** die Spannungsquelle (Uq) ein PWM-Modul (PWM1) eine Treiberhalbbrücke (6) beinhaltet, wobei das PWM-Modul (PWM) ausgestaltet ist, die Treiberbrücke (6) abhängig vom Differenzpotential (dU) zu regeln.

11. Langstatorlinearmotor nach Anspruch 10, **dadurch gekennzeichnet, dass** die Treiberhalbbrücke (6) mit GaN-Schaltern gefertigt ist.

12. Langstatorlinearmotor nach einem der Ansprüche 8 bis 11, **dadurch gekennzeichnet, dass** die Vergleichseinheit (4) ein Widerstandsnetzwerk (R1, R2, R3, R4) beinhaltet, das mit dem ersten Betriebspotential (Ub1), dem zweitem Betriebspotential (UB2) und dem Regelungspunkt (C) verbunden ist und ausgestaltet ist, aus dem ersten Betriebspotential (Ub1), dem zweitem Betriebspotential (UB2) und dem Istpotential (Uxist) am Regelungspunkt (C) die Potentialdifferenz (dU) zu ermitteln.

13. Langstatorlinearmotor nach einem der Ansprüche 8 bis 12, **dadurch gekennzeichnet, dass** eine Umwandlungseinheit (5) vorgesehen ist, der mit der Vergleichseinheit (4) verbunden ist und ausgestaltet ist, das Differenzpotential (dU) in einen vorgegebenen Strom (Ix) zu wandeln, **dass** ein Sensor (S) vorhanden ist, um den Iststrom (Ixst) im Regelungspunkt (C) zu messen **und dass** ein Stromregler (53) vorgesehen ist, der eingangsseitig mit der Umwandlungseinheit (5) und dem Sensor (S) verbunden ist, um den vorgegebenen Strom (Ix) von der Umwandlungseinheit (5) und den Iststrom (Ixist) vom Sensor (S) zu erhalten, ausgangsseitig mit der Stromquelle (Iq) verbunden ist und ausgestaltet ist einen Differenzstrom zu ermitteln und damit die Stromquelle (Iq) zu regeln.

14. Langstatorlinearmotor nach Anspruch 13, **dadurch gekennzeichnet, dass** die Umwandlungseinheit (5) als PI-Regler ausgestaltet ist.

15. Langstatorlinearmotor nach einem der Ansprüche 8 bis 14, **dadurch gekennzeichnet, dass** m>1 Stromquellen (Iq1, Iq2, Iq3) vorhanden sind, wobei die m Stromquellen (Iq1, Iq2, Iq3) mit dem Regelungspunkt (C) verbunden sind, die m Stromquellen (Iq1, Iq2, Iq3) ausgestaltet sind jeweils einen um 360°/m phasenverschobenen Phasenstrom (i1, i2, i3) in den Regelungspunkt (C) einzuspeisen.

## Claims

1. A method for controlling a plurality of n LLM coils (L1, ..., Ln) of a long-stator linear motor stator, **characterized in that** a first operating potential (Ub1) is applied to n first input terminals (A1, ..., An) of n half bridges (HB1, ..., HBn), a second operating potential (Ub2) is applied to n second input terminals (B1, ..., Bn) of the n half bridges; **that** for each half bridge (HB1, ... HBn), a first switch (S11, ..., S1n) is connected between a center point (C1, ..., Cn) of the respective half bridge (HB1, ..., HBn) and the first input terminal (A1, ..., An), and a second switch (S21, ..., S2n) is connected between the center point (C1, ..., Cn) of the relevant half bridge (HB1, ..., HBn) and the second input terminal (B1, ..., Bn); **that** the center point (C1, ..., Cn) of the n half bridges is, in each case, connected to n first terminals (L11, ..., L1n) of the n LLM coils (L1, ..., Ln); **and that** the second terminals (L11, ..., L1n) of the n LLM coils (L1, ..., Ln) are connected in a control point (C) that is regulated to a predetermined potential (Ux).

2. The method according to claim 1, **characterized in that** the predetermined potential (Ux) corresponds to half the potential difference between the first operating potential (Ub1) and the second operating potential (Ub2).

3. The method according to claim 1 or 2, **characterized in that** the second operating potential (Ub2) is zero.

4. The method according to any of claims 1 to 3, **characterized in that:** an actual potential (Uxist) is determined at the control point (C) and compared to the predetermined potential (Ux); **and that** and an actual current (Ixist) is fed to the control point (C) on the basis of a potential difference (dU) between the actual potential (Uxist) and the predetermined potential (Ux), in order to regulate the potential difference (dU) to a predetermined value.

5. The method according to claim 4, **characterized in that** the actual current (Ixist) is composed of m phase currents (i1, i2, i3) that are phase-shifted by 360°/m and is fed to the control point (C).

6. The method according to claim 5, **characterized in that** the m>1 phase currents (i1, i2, i3) are partially or entirely switched on or off in a manner dependent on the potential difference (dU).

7. A long-stator linear motor comprising a long-stator linear motor stator with a plurality n of LLM coils (L1, ..., Ln), **characterized in that** a device for controlling the plurality n of LLM coils (L1, ..., Ln) with n half bridges (HB1, ..., HBn), each having a first input terminal (A1, ..., An) and a second input terminal (B1, ..., Bn), is provided at the long-stator linear motor, wherein, per half bridge (HB1, ... HBn), a first switch (S11, ..., S1n) is provided between a center point (C1, ..., Cn) of the half bridge and the first input terminal (A1, ..., An), and a second switch is provided between the center point (C1, ..., Cn) of the relevant half bridge and the second input terminal (B1, ..., Bn), and wherein the n first input terminals (A1, ..., An) are connected to a first operating potential (Ub1) and the n second input terminals (B1, ..., Bn) are connected to a second operating potential (Ub2); **that** a half bridge (HB1, ..., HBn) is associated with each LLM coil (L1, ..., Ln), wherein the n center points (C1, ..., Cn) of the n half bridges are respectively connected to a first terminal (L11, ..., L1n) of the associated LLM coil (L1, ..., Ln); **that** the second terminals (L11, ..., L1n) of the n LLM coils (L1, ..., LN) are connected to a control point (C); **and that** a control unit (3) which is configured to regulate an actual potential (Uxist) of the control point (C) to a predetermined potential (Ux) is provided.

8. The long-stator linear motor according to claim 7, **characterized in that** a comparison unit (4) is provided, wherein the comparison unit (4) is arranged to determine the potential difference (dU) between the predetermined potential (Ux) and the actual potential (Uxist) in the control point (C); **and that,** in the control unit (3), a current source (Iq) is provided which feeds an actual current (Ixist) to the control point (C) in a manner dependent on the potential difference (dU), in order to regulate the potential difference (dU) to a predetermined value.

9. The long-stator linear motor according to claim 8, **characterized in that** the current source (Iq) includes a choke (D) and a voltage source (Uq), wherein the choke (D) is connected to the control point (C) and is configured to generate the actual current (Ixist) via a voltage (U) generated by the voltage source (Uq) at the choke (D).

10. The long-stator linear motor according to claim 9, **characterized in that** the voltage source (Uq) includes a PWM module (PMW1) and a drive half bridge (6), wherein the PWM module (PWM) is configured to regulate the driver half bridge (6) in a manner dependent on the differential potential (dU).

11. The long-stator linear motor according to claim 10, **characterized in that** the driver half bridge (6) is fabricated with GaN switches.

12. The long-stator linear motor according to any of claims 8 to 11, **characterized in that** the comparison unit (4) includes a resistor network (R1, R2, R3, R4) that is connected to the first operating potential (Ub1), the second operating potential (UB2), and the control point (C), and is configured to determine the potential difference (dU) from the first operating potential (Ub1), the second operating potential UB2), and the actual potential (Uxist) at the control point (C).

13. The long-stator linear motor according to any of claims 8 to 12, **characterized in that** a conversion unit (5) which is connected to the comparison unit (4) and is configured to convert the differential potential (dU) to a predetermined current (Ix) is provided; **that** a sensor (S) to measure the actual current (Ixst) in the control point (C) is provided; **and that** a current controller (52) is provided which is connected to the conversion unit (5) and the sensor (S) on the input side to obtain the predetermined current (Ix) from the conversion unit (5) and the actual current (Ixist) from the sensor (S) and which is connected to the current source (Iq) on the output side and which is configured to determine a differential current to regulate the current source (Iq) therewith.

14. The long-stator linear motor according to claim 13, **characterized in that** the conversion unit (5) is configured as a PI controller.

15. The long-stator linear motor according to any of claims 8 to 14, **characterized in that** m>1 current sources (Iq1, Iq2, Iq3) are provided, wherein the m current sources (Iq1, Iq2, Iq3) are connected to the control point (C), and the m current sources (Iq1, Iq2, Iq3) are configured to feed, to the control point (C), a phase current (i1, i2, i3) that is been phase-shifted by 360°/m.

## Revendications

1. Procédé permettant d'exciter une pluralité de n bobines LLM (L1,..., Ln) d'un stator de moteur linéaire à long stator, **caractérisé en ce qu'**un premier potentiel de fonctionnement (Ub1)est appliqué à n premières bornes d'entrée (A1,..., An) de n demi-ponts (HB1 ,..., HBn), un second potentiel de fonctionnement (Ub2) est appliqué à n secondes bornes d'entrée (B1 ,..., Bn) des n demi-ponts, **que,** pour chaque demi-pont (HB1,..., HBn), un premier commutateur (S11,..., S1n) est monté entre un point central (C1,..., Cn) du demi-pont respectif (HB1,..., HBn) et la première borne d'entrée (A1,..., An), et un second commutateur respectif (S21,..., S2n) est monté entre le point central (C1,..., Cn) du demi-pont concemé (HB1,..., HBn) et la seconde borne d'entrée (B1,..., Bn), **que** le point central (C1,..., Cn) des n demi-ponts est raccordé respectivement à n premières bornes (L11,..., L1n) des n bobines LLM (L1,..., Ln), **et que** les secondes bornes (L11,..., L1n) des n bobines LLM (L1,..., Ln) sont raccordées dans un point de régulation (C) qui est réglé à un potentiel prédéfini (Ux).

2. Procédé selon la revendication 1, **caractérisé en ce que** le potentiel prédéfini (Ux) correspond à la moitié de la différence de potentiel entre le premier potentiel de fonctionnement (Ub1) et le second potentiel de fonctionnement (Ub2).

3. Procédé selon la revendication 1 ou 2, **caractérisé en ce que** le second potentiel de fonctionnement (Ub2) est nul.

4. Procédé selon l'une des revendications 1 à 3, **caractérisé en ce qu'**un potentiel réel (Uxist) est détecté au point de régulation (C) et est comparé au potentiel prédéfini (Ux) **et qu'**un courant réel (Ixist) est injecté dans le point de régulation (C) sur la base d'une différence de potentiel (dU) entre le potentiel réel (Uxist) et le potentiel prédéfini (Ux), afin de régler la différence de potentiel (dU) à une valeur prédéfinie.

5. Procédé selon la revendication 4, **caractérisé en ce que** le courant réel (Ixist) est injecté dans le point de régulation (C) en étant composé de m courants de phase (i1, i2, i3) déphasés de 360°/m.

6. Procédé selon la revendication 5, **caractérisé en ce que** les m > 1 courants de phase (i1, i2, i3) sont connectés ou déconnectés partiellement ou entièrement en fonction de la différence de potentiel (dU).

7. Moteur linéaire à stator long comprenant un stator de moteur linéaire à stator long comportant une pluralité n de bobines LLM (L1,..., Ln), **caractérisé en ce qu'**un dispositif destiné à exciter la pluralité n de bobines LLM (L1 ,..., Ln), comportant n demi-ponts (HB1,..., HBn) comportant respectivement une première borne d'entrée (A1,..., An) et une seconde borne d'entrée (B1,..., Bn), est prévu sur le moteur linéaire à stator long, pour chaque demi-pont (HB1,..., HBn), un premier commutateur (S11,..., S1n) étant prévu entre un point central (C1,..., Cn) du demi-pont et la première borne d'entrée (A1,..., An) et un second commutateur étant prévu entre le point central (C1,..., Cn) du demi-pont et la second borne d'entrée (B1,..., Bn), et les n premières bornes d'entrée (A1,..., An) étant raccordées à un premier potentiel de fonctionnement (Ub1) et les n secondes bornes d'entrée (B1,..., Bn) étant raccordées à un second potentiel de fonctionnement (Ub2), **qu'**un demi-pont (HB1,..., HBn) est associé àchaque bobine LLM (L1,..., Ln), les n points centraux (C1,..., Cn) des n demi-ponts étant respectivement raccordés à une première borne (L11,..., L1n) de la bobine LLM associée (L1,..., Ln), **que** les secondes bornes (L11,..., L1n) des n bobines LLM (L1,..., Ln) sont connectées à un point de régulation (C) **et qu'une** unité de régulation (3) est prévue, laquelle est conçue pour régler un potentiel réel (Uxist) du point de régulation (C) à un potentiel prédéfini (Ux).

8. Moteur linéaire à stator long selon la revendication 7, **caractérisé en ce qu'**une unité de comparaison (4) est prévue, l'unité de comparaison (4) étant conçue pour déterminer la différence de potentiel (dU) entre le potentiel prédéfini (Ux) et le potentiel réel (Uxist) dans le point de régulation (C) **et qu**'une source de courant (Iq) est prévue dans l'unité de régulation (3), laquelle source de courant injecte un courant réel (Ixist) dans le point de régulation (C) en fonction de la différence de potentiel (dU), afin de régler la différence de potentiel (dU) à une valeur prédéfinie.

9. Moteur linéaire à stator long selon la revendication 8, **caractérisé en ce que** la source de courant (Iq) comprend une bobine d'arrêt (D) et une source de tension (Uq), la bobine d'arrêt (D) étant raccordée au point de régulation (C) et étant conçue pour générer le courant réel (Ixist) par l'intermédiaire d'une tension (U) générée par la source de tension (Uq) au niveau de la bobine d'arrêt (D).

10. Moteur linéaire à stator long selon la revendication 9, **caractérisé en ce que** la source de tension (Uq) comprend un module PWM (PWM1) et un demi-pont pilote (6), le module PWM (PWM) étant conçu pour régler le pont pilote (6) en fonction de la différence de potentiel (dU).

11. Moteur linéaire à stator long selon la revendication 10, **caractérisé en ce que** le demi-pont pilote (6) est réalisé avec des commutateurs en GaN.

12. Moteur linéaire à stator long selon l'une des revendications 8 à 11, **caractérisé en ce que** l'unité de comparaison (4) comprend un réseau de résistances (R1, R2, R3, R4) qui est raccordé au premier potentiel de fonctionnement (Ub1), au second potentiel de fonctionnement (UB2) et au point de régulation (C) et qui est conçu pour déterminer la différencede potentiel (dU) à partir du premier potentiel de fonctionnement (Ub1), du second potentiel de fonctionnement (UB2) et du potentiel réel (Uxist) au point de régulation (C).

13. Moteur linéaire à stator long selon l'une des revendications 8 à 12, **caractérisé en ce qu'**une unité de conversion (5) est prévue, laquelle est raccordée à l'unité de comparaison (4) et est conçue pour convertir la différence de potentiel (dU) en un courant prédéfini (Ix), **qu'**un capteur (S) est présent afin de mesurer le courant réel (Ixst) dans le point de régulation (C) **et qu'un** régulateur de courant (53) est prévu, lequel est raccordé du côté entrée à l'unité de conversion (5) et au capteur (S) afin de recevoir le courant prédéfini (Ix) à partir de l'unité de conversion (5) et le courant réel (Ixist) à partir du capteur (S), est raccordé du côté sortie à la source de courant (Iq) et est conçu pour déterminer un courant différentiel et ainsi régler la source de courant (Iq).

14. Moteur linéaire à stator long selon la revendication 13, **caractérisé en ce que** l'unité de conversion (5) est conçue sous forme de régulateur PI.

15. Moteur linéaire à stator long selon l'une des revendications 8 à 14, **caractérisé en ce que** m > 1 sources de courant (Iq1, Iq2, Iq3) sont présentes, les m sources de courant (Iq1, Iq2, Iq3) étant raccordées au point de régulation (C), les m sources de courant (Iq1, Iq2, Iq3) étant conçues pour injecter dans le point de régulation (C) un courant de phase respectif (i1, i2, i3) déphasé de 360°/m.
